# EUROPEAN PATENT APPLICATION

(11) **EP 4 675 806 A1**
(43) Date of publication of application: **07.01.2026**
(21) Application number: 24186488.3
(22) Date of filing: 04.07.2024
(51) Int. Cl.: H01M 50/325, H01M 50/308

(54) **PRESSURE COMPENSATION DEVICE FOR A BATTERY**

(71) Applicant: Newfrey LLC, New Britain, CT 06053 (US)
(72) Inventor: Stau, Bastian, 35394 Gießen (DE); Boerger, Kai, 35394 Gießen (DE); Will, Peter, 35394 Gießen (DE)
(74) Representative: Haarpatent Patentanwälte Krämer Meyer

(57) **Abstract**

A pressure compensation device (1) is suggested for connecting to a battery, having a hollow cylindrical base body (2) that can be attached to a battery casing and a cover (3). The base body (2) and cover (3) can be movably connected via a first and a second connecting means. The first connecting means is formed by at least one spring element (10) which is attached at its first end to a support element (9) extending axially along a centre axis of the pressure compensation device (1) and which, with its second, free and radially resilient end (11) forms at least one contact surface (12) which, in a normal operating state of the pressure compensation device (1), interacts with a corresponding engagement surface of the second connecting means in a form-fitting manner. The second connecting means forms a channel-shaped receptacle (14) for the first connecting means, which extends axially to the centre axis, with at least one engagement surface present in the receptacle (14), which is engaged from behind by the contact surface (12) of the free end of the spring element (10).

## Description

The invention relates to a pressure compensation device for a battery with a base body and a cover that can be movably attached to it. For instance, the cover can be displaced or removed from the base body in the event of emergency degassing.

A battery, e.g. a battery for motor vehicles, usually comprises several battery cells arranged in a battery casing. Under certain circumstances, gas may be produced in the battery cells, and the gas must be removed from the battery casing to prevent damage to the casing and thus to the battery.

DE 10 2012 022 346 B4 describes a membrane for batteries that is permeable to gases but impermeable to liquids and solids. The membrane can be connected to the base body of the battery housing and guarantees gas exchange and thus pressure equalization during normal operation. For emergency degassing, the membrane can be destroyed with a spike, which leads to a sudden pressure equalization.

It is advantageous to protect the membrane from external influences in order to avoid damage to the membrane and, for example, the entry of water. Covers for membranes are known from the state of the art. Such covers must be designed in such a way that they also allow emergency degassing.

DE 10 2020 109 148 A1 describes a battery housing for a battery with a membrane-like degassing element that is arranged on the housing wall of the battery housing and covered by a protective cap. In the event of a strong gas development in the battery, the protective cap is released from the housing. In addition, the membrane is designed to burst or tear in the event of a strong gas development. The protective cap is reversibly connected to the housing via holding elements arranged near the edge of an opening.

WO 2023/198504 A1 describes a pressure compensation device with a cap and a base body. The cap can be reversibly attached to the base body by sliding a clamping element over a ramp body and connecting it to it in a forcelocking manner. Depending on the design, either the clamping element can be on the cap and the ramp body on the base body, or vice versa.

A comparable device is known from DE 10 2019 204 859 A1, which also includes a spring element, such as a spiral spring, to assist the opening in case of an emergency degassing.

The disadvantage of the known degassing devices is that the use of a bursting membrane is cost-intensive and technically complex to realize. Another drawback is the difficulty to protect the membrane with regard to external influences like dust or water pressure without losing air volume in case of thermal propagation. Furthermore, the known devices are complex to construct due to numerous individual parts and tend to jam during emergency opening. The additional use of metal spring elements makes the construction more expensive.

The invention is based on the task of providing a device that, on the one hand, enables safe emergency venting and, on the other hand, also enables the use of conventional membranes.

The task is solved by the features of claim 1. Preferred embodiments are described in the dependent claims.

The problem is solved by providing a pressure compensation device for connecting to a battery, having a hollow cylindrical base body that can be attached to a battery casing and a cover, wherein base body and cover are movably or reversibly connected via a first and a second connecting means, the first connecting means being formed by at least one spring element which is attached at its first end to a support element extending axially along a centre axis of the pressure compensation device and which, with its second, free and radially resilient end forms at least one contact surface which, in a normal operating state of the pressure compensation device, interacts with a corresponding engagement surface of the second connecting means in a form-fitting manner, and wherein the second connecting means forms a channel-shaped receptacle for the first connecting means, which extends axially to the centre axis, with at least one engagement surface present in the receptacle, which is engaged by the contact surface of the free end of the spring element. It has been shown that the pressure compensation device according to the invention can be easily connected to a battery housing, in particular a pressure equalization opening of the battery housing, and ensures efficient emergency degassing by either releasing the cover from the base body at a defined overpressure in the battery housing or by moving the cover from a first to a second position with regard to the base body at a defined overpressure in the battery housing. The centrally guided connection between the connecting means of the cover and the base body prevents jamming. In addition, use of an expensive bursting membrane can be avoided. A further advantage of the pressure compensation device is that the first connecting means can be attached to the cover and the second connecting means to the base body, or vice versa. The device can therefore be easily adapted to an individual use.

One embodiment involves the spring element being wedge-shaped with a contact surface that slopes radially outwards. The spring element can be designed as a wedge-shaped latching hook whose contact surface slopes outwards, i.e. is in particular angled. The contact surface of the spring element can interact with a corresponding engagement surface in the channel-shaped receptacle in a form-fitting manner.

Depending on the use, the spring element may be segmented and comprise several free ends that act in the same way. In this regard, it is advantageous to have several spring elements that are linked to the support element and interact with several or one engagement surface.

In order to simplify the guiding of the cover when it is inserted into the base body, as well as the removal or the motion from a closed to an open position of the cover from the base body in case of emergency degassing, guiding means can be provided on the cover and on the base body. In one embodiment, the cover or base body has radially protruding fins on the channel-shaped receptacle. The fins can also extend axially to the centre axis.

Furthermore, it may be advantageous that plate-shaped guiding means are present on the cover or base body, extending axially to the centre axis, of which two are aligned parallel to each other and designed to receive a radially extending fin. The cover and base body can be connected in a guided manner by the interaction of the plate-shaped guiding means and the radially extending fins. A further advantage of the device is that the cover cannot become jammed when it is released in the event of an emergency degassing.

The pressure compensation device and its parts are preferably made of plastic. Polyphenylene sulfide has proven to be particularly advantageous in this regard, as it is a high-temperature-resistant thermoplastic and has good mechanical properties even at temperatures well above 200 °C.

The engagement surface for the spring element can be formed in an embodiment in which the channel-shaped receptacle has at least one undercut or a recess that interacts with the free end of the spring element in a form-fitting manner. The recess can also be formed as an opening or the like. Furthermore, an engagement surface for the spring element can be formed by advantageously making the length of the receptacle shorter than the length of the support element, so that a free end of the receptacle forms an undercut for the contact surface of the free end of the spring element to engage with.

It may be advantageous for the base body to comprise an end close to the cover and an end close to the battery housing, and for both ends to have a circumferential rim whose diameter is larger than that of the base body. The end of the base body near the battery housing can also comprise a fastening means, such as a snap-on, snap-in or screw connection, by means of which the base body can be fastened to the pressure equalization opening of the battery housing.

It is preferred that a circumferential groove is provided at the free ends of the base body to accommodate a sealing element. The groove can be open towards the cover or the battery housing. The sealing element can be an O-ring or a slit O-ring and can be made of plastic.

In an advantageous embodiment, the cover has a gas passage opening that is completely covered by a gas-permeable membrane. The gas passage opening advantageously forms a gas channel with a gas passage opening in the base body. The membrane is preferably impermeable to liquids and solids. The cover can advantageously comprise a protective cap that can be connected to the cover in a form-fitting and gas-permeable manner.

In an embodiment, the cover or base comprises abutment means in order to avoid the complete removal of the cover from the body and avoid loose parts. It is preferred that the cover or base body comprise abutment means which interact with a corresponding abutment portion on the cover or base body so that, in the event of emergency degassing, the cover moves from a first position to a second position in which a substantial gap is created between the base body and the cove. The abutments means comprise for instance one locking finger provided on the cover and an abutment portion provided on the base body. For example, the cover comprises two stable positions. In the first position, the cover is in a closed position with regard to the base body. In the second position, the cover is in an open position with regard to the base body and an efficient emergency degassing can occur.

Alternatively, the cover may also be completely removed from the base.

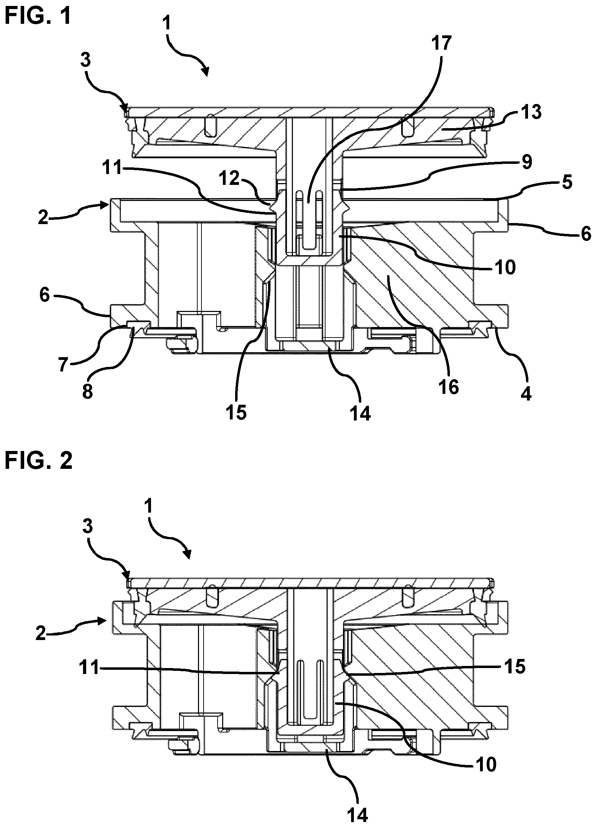

The invention is explained in more detail below with reference to an embodiment of the invention, which is shown in the drawing. It shows
- Figure 1: a sectional view of a pressure compensation device in an open state,
- Figure 2: a sectional view of a pressure compensation device in a closed state,

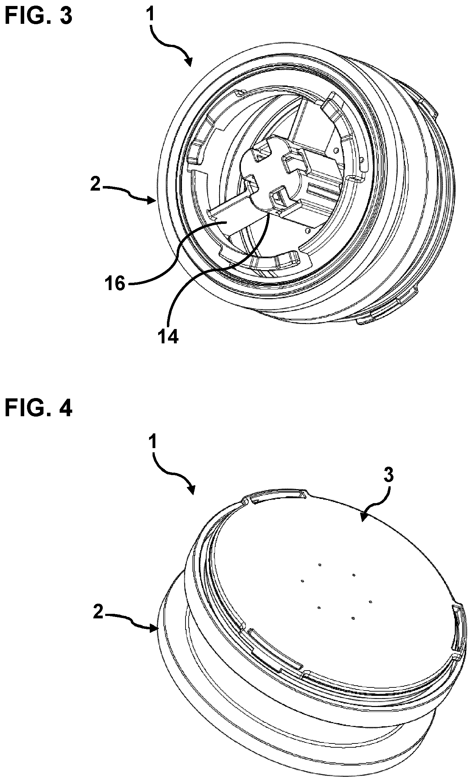

- Figure 3: a perspective view of a pressure compensation device from below and
- Figure 4: a perspective view of a pressure compensation device from above.

The pressure compensation device 1 comprises a base body 2 and a cover 3, which can be movably connected to each other. The base body 2 has an end 4 close to the battery housing and an end 5 close to the cover, with the end 4 close to the battery housing serving to connect the pressure compensation device 1 to a gas passage opening of a battery housing not shown. The connection can be made using connections known to the skilled person, such as a screw or plug connection. For this purpose, the base body 2, or more precisely the end 4 close to the battery housing, can have corresponding connecting or fastening means.

Close to the two ends 4, 5, a circumferential rim 6 can be formed, which has a larger diameter than a constriction of the base body 2 present between the two rims 6. The rims 6 can also each accommodate a circumferential groove 7, which is open towards the cover 3 or towards the battery housing and serves to accommodate a sealing element 8. In the embodiment shown, only one groove 7 is indicated in the end 4 near the battery housing.

The sealing element 8 can be designed as a plastic O-ring, for example. The rim 6 at the end 5 close to the cover advantageously extends at least partially over a circumferential surface of the cover 3. In an alternative embodiment not shown, a sealing element can be provided in a groove in the cover. The groove is preferably arranged in the circumferential surface of the cover.

In the embodiment shown, the cover 3 has a first connecting means, which is formed by a support element 9 extending axially to the centre axis of the pressure compensation device 1, to which at least one radially resilient spring element 10 is hinged. The support element 9 can be tubular and extend coaxially to the centre axis. The spring element 10 can be articulated at the free end of the support element 9. The free end 11 of the spring element 10 is resilient radially to the centre axis and preferably projects in the direction of the cover. In the embodiment shown, the spring element 10 is designed as a latching hook. The spring element 10 has an inclined contact surface 12 at its free end 11. The spring element 10 can also be segmented and designed as several spring elements 10.

Guiding means 13 extend axially from the cover 3 to the centre axis and can run radially from the support element 9 to the inner wall of the cover 3. The guiding means 13 can be plate-shaped and preferably run parallel, so that two parallel guiding means 13 form a receptacle.

As a second connecting means, the base body 2 has a hollow cylindrical receptacle 14 arranged centrally, in particular coaxially to the centre axis. The receptacle 14 comprises recesses, cut-outs or undercuts 15, which form an engagement surface for the contact surface 12 of the spring element 10. The size, i.e. in particular the diameter of the receptacle 14, is designed in such a way that the support element 9 with spring element 10 can be inserted into it.

Fins 16 extend radially from the inner wall of the base body 2 and widen axially. The fins16 can extend from the inner wall to the receptacle 14. Depending on the use, at least one radially extending fin 16 may be present.

The insertion of the cover 3 into the base body 2 is accomplished by inserting the support element 9 with spring element 10 into the centrally positioned receptacle 14 in the base body 2. At the same time, the plate-shaped guiding means 13 of the cover 3 serve to accommodate the radially extending fins 16 of the base body 2, thereby guiding the cover 3 and ensuring accurate insertion.

The spring element 10 is pretensioned during the insertion process and slides along the inner wall of the receptacle 14. As soon as the free end 11 of the spring element 10 reaches a recess or an undercut 15 in the receptacle 14, the spring element 10 relaxes, the free end 11 moves radially outwards and locks into place. At this point, the contact surface 12 of the free end 11 of the spring element 10 makes positive contact with the engagement surface formed by the recess or the undercut 15. The cover 2 is now movably connected to the base body 2.

If the pressure compensation device 1 is connected to a battery housing, a gas-permeable membrane in the pressure compensation device 1, in particular in the cover 3, can ensure that the battery housing is vented during normal operation. For this purpose, the cover 3 can have a protective cap, not shown, which is connected to the cover 3 in a gas-permeable manner.

The membrane, which is not shown, can be located between the protective cap and cover 3 and conceal a gas passage opening that corresponds to a gas passage opening in the base body 2.

If a battery cell produces gas that needs to be released, the pressure in the battery housing increases.

In a first embodiment, once a defined pressure level is reached, the free end 11 of the spring element 10 pivots radially inwards and releases the cover. The spring element 10 with support element 9 moves out of the receptacle 14 and detaches from the base body 2. Due to the centred guide through the channel-shaped receptacle 14 and the guiding means 13 and fins 16 provided on the cover 3 and base body 2, straight guidance is maintained even when the cover 3 is removed and tilting is prevented. After removing the cover 3, emergency degassing can take place and pressure equalisation can be restored.

Alternatively, in a second embodiment, once a defined pressure level is reached, the free end 11 of the spring element 10 pivots radially inwards and allows the cover to move from its initial position, which corresponds to a first position, to a second position in which a substantial gap between the base body 2 and the cover 3 is created in order to allow an emergency venting. The spring element 10 with support element 9 moves with regard to the receptacle 14 until a locking finger 17 provided on the cover 3 or on the base body 2 abuts an abutment portion provided on the base body 2 or on the cover 3. Once the locking finger 17 abuts against the abutment portion, the cover 3 stops its motion and remains in the said second portion. Due to the centred guiding through the channel-shaped receptacle 14 and the guiding means 13 and fins 16 provided on the cover 3 and base body 2, straight guidance is maintained until the cover 3 reaches the second position, which is a stable position and tilting is prevented. After the cover 3 reaches the second position, emergency degassing can take place and pressure equalisation can be restored. Once emergency degassing has been realized, the cover 3 may be moved back from the second to the first position. For instance, an external force is applied to the cover 3 in the direction of the base body 2 to move it from the second to the first position.

It should be noted that the first and second connecting means can be provided either on the cover 3 or on the base body 2. The same applies to the guiding means 13 and fins 16, which can be present either on the cover 3 or on the base body 2. The invention is not limited to the embodiment shown, but is merely illustrated here.

## Claims

1. Pressure compensation device (1) for connecting to a battery, having a hollow cylindrical base body (2) that can be attached to a battery casing and a cover (3), wherein base body (2) and cover (3) are movably or reversibly connected via a first and a second connecting means,
the first connecting means being formed by at least one spring element (10) which is attached at its first end to a support element (9) extending axially along a centre axis of the pressure compensation device (1) and which, with its second, free and radially resilient end (11) forms at least one contact surface (12) which, in a normal operating state of the pressure compensation device (1), interacts with a corresponding engagement surface of the second connecting means in a form-fitting manner,
and wherein the second connecting means forms a channel-shaped receptacle (14) for the first connecting means, which extends axially to the centre axis, with at least one engagement surface present in the receptacle (14), which is engaged by the contact surface (12) of the free end of the spring element (10).

2. Pressure compensation device (1) according to claim 1, **characterized in that** the spring element (10) is wedge-shaped with a contact surface (12) that slopes radially outwards.

3. Pressure compensation device (1) according to claim 1 or 2, **characterized in that** the spring element (10) is segmented and comprises several free ends (11) with the same effect.

4. Pressure compensation device (1) according to one of the preceding claims, **characterized in that** the cover (3) or base body (2) has radially protruding fins on the channel-shaped receptacle.

5. Pressure compensation device (1) according to claim 4, **characterized in that** plate-shaped guiding means (13) are provided on the cover (3) or base body (2), which extend axially to the centre axis and of which two are aligned parallel to each other and designed to receive a radially extending fin (16).

6. Pressure compensation device (1) according to one of the preceding claims, **characterized in that** the support element (9) is tubular and extends coaxially with the central axis.

7. Pressure compensation device (1) according to one of the preceding claims, **characterized in that** the pressure compensation device (1) is made of plastic.

8. Pressure compensation device (1) according to one of the preceding claims, **characterized in that** the engagement surface is formed by an undercut or a recess (15) present in the receptacle (14).

9. Pressure compensation device (1) according to one of the preceding claims 1 to 7, **characterized in that** the length of the receptacle (14) is shorter than the length of the support element (9), so that a free end of the receptacle (14) forms an undercut (15) for the contact surface (12) of the free end (11) of the spring element (10) to engage with.

10. Pressure compensation device (1) according to one of the preceding claims, **characterized in that** the base body (2) comprises an end (5) close to the cover and an end (4) close to the battery housing, and both ends (4, 5) have a circumferential rim (6) whose diameter is increased compared to that of the base body (2).

11. Pressure compensation device (1) according to claim 10, **characterized in that** a circumferential groove (7) for receiving a sealing element (8) is present at the free ends (4, 5) of the base body (2).

12. Pressure compensation device (1) according to one of the preceding claims, **characterized in that** a circumferential groove (7) for receiving a sealing element (8) is provided at one end of the cover (3).

13. Pressure compensation device (1) according to one of the preceding claims, **characterised in that** there is a gas passage opening in the cover (3) which is completely covered by a gas-permeable membrane.

14. Pressure compensation device (1) according to claim 13, **characterised in that** the cover (3) comprises a protective cap which can be connected to the cover (3) in a form-fitting and gas-permeable manner.

15. Pressure compensation device (1) according to one of the preceding claims, **characterised in that** the cover (3) or base body (2) comprises abutment means (17) which interact with a corresponding abutment portion on the cover (3) or base body (2) so that, in the event of emergency degassing, the cover (3) moves from a first position to a second position in which a substantial gap is created between the base body (2) and the cover (3).
